# EUROPÄISCHE PATENTSCHRIFT

(11) **EP 1 057 944 B1**
(45) Veröffentlichungstag und Bekanntmachung des Hinweises auf die Patenterteilung: **24.09.2003**
(21) Anmeldenummer: 00109935.7
(22) Anmeldetag: 11.05.2000
(51) Int. Cl.: E04B 1/19

(54) **Stabfachwerk zur Aufnahme von Paneelen oder dergleichen**
Trellis work supporting panels or similar
Treillis supportant des panneaux ou similaires

(30) Priorität: 29.05.1999 DE 29909438 U
(43) Veröffentlichungstag der Anmeldung: 06.12.2000
(73) Patentinhaber: Behr, Karl-Günter, 35444 Bibertal (DE); Merczak, Peter, 40547 Düsseldorf (DE)
(72) Erfinder: Behr, Karl-Günter, 35444 Bibertal (DE); Merczak, Peter, 40547 Düsseldorf (DE)
(74) Vertreter: Kossobutzki, Walter, Dipl.-Ing.(FH)

(56) Entgegenhaltungen:
- WO-A-90/07652
- US-A- 3 632 147
- US-A- 3 913 289
- US-A- 4 711 595
- US-A- 4 787 191
- US-A- 5 626 434
- US-A- 5 755 641

## Beschreibung

Die Erfindung bezieht sich auf ein Stabfachwerk zur Aufnahme von Paneelen oder dgl., bestehend aus mehreren Verbindungsstäben, die mit ihren Enden in zylindrische Öffnungen von Knotenstücken führend einsteckbar und anschließbar sind.

Auf Messen und in Ausstellungen werden zur Präsentation flächige (zweidimensionale) oder räumliche (dreidimensionale) Stabfachwerke eingesetzt, die zur Aufnahme unterschiedlichster Paneele oder dergleichen dienen. Ein solches flächiges oder räumliches Stabfachwerk besteht aus einer Vielzahl von meist rohrförmigen Querschnitt aufweisenden Verbindungsstäben, die jeweils an einem sogenannten Knotenstück mit mindestens einem anderen Verbindungsstab verbunden sind. Ein solches Knotenstück kann quaderförmig, kugelförmig oder scheibenförmig ausgebildet sein und besitzt mindestens zwei unter einem vorgegebenen Winkel zueinander verlaufende, zylindrische Öffnungen, in die jeweils ein Ende eines Verbindungsstabes einsteckbar ist. Um nun die Verbindungsstäbe sicher am Knotenstück anzuschließen, ist es bekannt, die Verbindungsstäbe in den Öffnungen des Knotenstückes festzuklemmen. Dies ist bei einem kugelförmig ausgebildeten Knotenstück meistens nicht möglich. Hier müssen dann diagonale Zugschnüre gespannt werden, die verhindern, daß das Anschlußende des Verbindungsstabes die Bohrung des Knotenstückes verlassen kann. Ferner ist es bekannt, die Enden der Verbindungsstäbe mit Gewinde zu versehen und in den ebenfalls Gewinde aufweisenden Öffnungen des Knotenstückes einzuschrauben. Dies ist jedoch nur teilweise möglich, da ein Knotenstück zum Anschluß eines Verbindungsstabes nicht immer gedreht werden kann. Schließlich ist es bekannt, die Enden der Verbindungsstäbe mit Schlitzen zu versehen und in den zylindrischen Öffnungen mittels besonderer Klammern festzuklemmen. Ein solcher Anschluß hat sich in der Praxis als verhältnismäßig aufwendig und unhandlich erwiesen. Für das Festklemmen ist immer ein besonderes Werkzeug erforderlich. Ein Stabfachwerke bei dem die Verbindungsstäbe in den Knotenstücken ohne Zuhilfenahme eines Werkzeuges gesichert werden können ist aus US-A -5,755,641 bekannt.

Der Erfindung liegt deshalb die Aufgabe zugrunde, ein Stabfachwerk zur Aufnahme von Paneelen oder dergleichen zu schaffen, welches einen verhältnismäßig einfachen Aufbau besitzt und leicht zusammensteckbar ist.

Zur Lösung dieser Aufgabe wird gemäß der Erfindung bei einem Stabfachwerk der eingangs beschriebenen Gattung vorgeschlagen, daß jeder Verbindungsstab mit geringem Abstand von seinen freien Enden jeweils zwei sich gegenüberliegende, radiale Schlitze mit aus denselben federnd herausragenden Nasen einer eingesetzten Feder besitzt, und daß jede Öffnung des Knotenstückes für jede Nase der Sperrfeder eine dieselbe, in den Schlitz zurückdrückende Einsteckschräge sowie eine sich daran anschließende Hinterschneidung zur Aufnahme der aus dem Verbindungsstab herausragenden Nase aufweist.

Eine solche Ausgestaltung stellt sicher, daß die Verbindungsstäbe ohne Werkzeuge in den zylindrischen Öffnungen der Knotenstücke eingesteckt und gesichert werden können. Über die Einsteckschrägen federn zunächst die Nasen zurück und rasten dann in die Hinterschneidungen ein. Für die Demontage müssen die Verbindungsstäbe lediglich um einen Winkel von etwa 90° in den Öffnungen gedreht werden. Dabei werden die Nasen der Federn in dem Verbindungsstab zurückgedrückt und die Verbindungsstäbe können aus den zylindrischen Öffnungen entfernt werden. Auch dafür ist kein Werkzeug erforderlich. Eine solche Verbindung ist auch bei kugelförmigen Knotenstücken möglich. Sowohl die Montage als auch die Demontage lassen sich in verhältnismäßig kurzer Zeit durchführen.

Weitere Merkmale eines Stabfachwerkes gemäß der Erfindung sind in den Ansprüchen 2 bis 6 offenbart.

Die Erfindung wird nachfolgend anhand eines in einer Zeichnung dargestellten Ausführungsbeispieles näher erläutert. Dabei zeigen
- Fig.1: eine Draufsicht auf ein scheibenartiges Knotenstück mit nur angedeuteten, eingesteckten Verbindungsstäben,
- Fig.2: eine Draufsicht auf ein Kreuzknotenstück mit ebenfalls nur angedeuteten, eingesteckten Verbindungsstäben und
- Fig.3: einen Schnitt durch das Knotenstück der Fig. 1 im Bereich einer zylindrischen Öffnung mit einem eingesteckten Verbindungsstab.

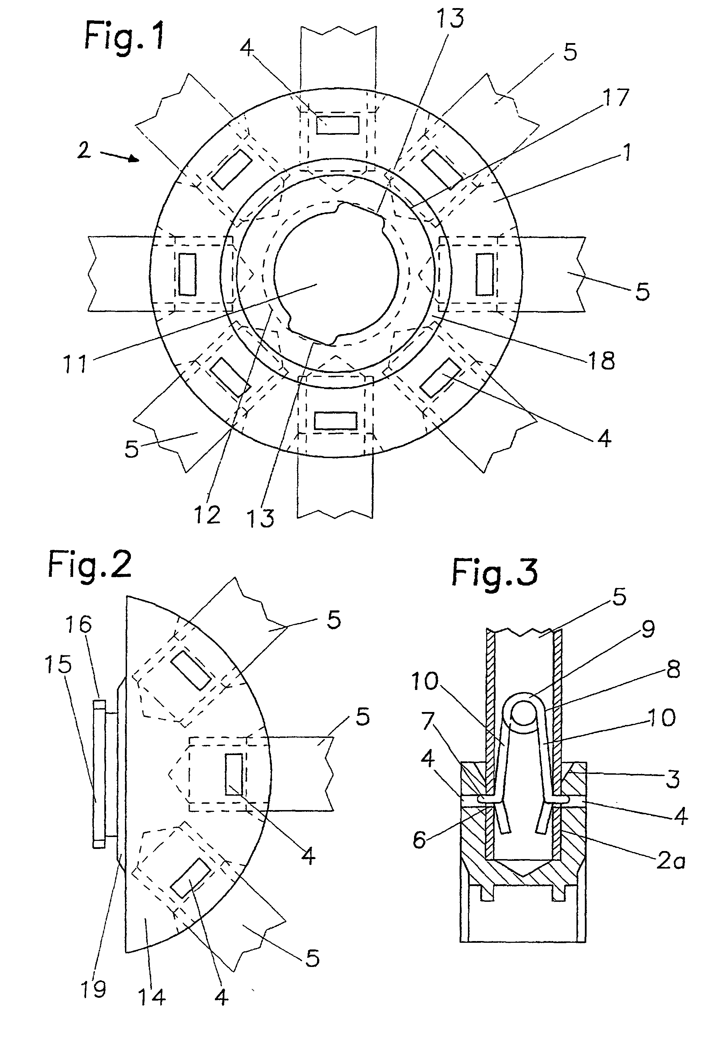

In der Figur 1 der Zeichnung ist ein Knotenstück 1 gezeigt, welches aus einem geeigneten Werkstoff, beispielsweise aus Leichtmetall, hergestellt ist und einen Durchmesser von etwa 60 mm aufweist. Die Dicke des scheibenartigen Knotenstückes beträgt etwa 20 mm. In die Mantelfläche des Knotenstückes 1 sind gemäß der Fig. 1 der Zeichnung acht radial verlaufende, als Bohrungen ausgebildete Öffnungen 2 eingearbeitet, die als sogenannte Sacklöcher ausgebildet sind. Am äußeren Ende dieser Öffnungen 2 sind zwei sich gegenüberliegende Einsteckschrägen 3 vorgesehen, die jedoch in der Fig. 1 der Zeichnung um 90° versetzt gezeichnet sind. Mit Abstand von der Mantelfläche und mit geringem Abstand von der Einsteckschräge 3 sind zwei sich gegenüberliegende Hinterschneidungen 4 vorgesehen, die bei einem scheibenartigen Knotenstück bis zur äußeren Stirnfläche des Knotenstückes 1 führen und somit als sogenannte Queröffnung ausgebildet sind.

Die nur mit ihrem Endbereich angedeuteten Verbindungsstäbe 5 sind zumindest in ihren Endbereichen als Rohre ausgebildet und besitzen zwei sich diametral gegenüberliegende Schlitze 6 (Fig. 3). In jeden Schlitz 6 ragt eine Nase 7 einer Feder 8. Diese Feder 8 besitzt in diesem Ausführungsbeispiel mindestens zwei schraubenlinienförmig verlaufende Windungen 9, die in Schenkel 10 übergehen. Kurz vor dem freien Ende dieser Schenkel 10 sind an denselben die bereits erwähnten Nasen 7 geformt, die eine bogenförmige Gestaltung besitzen. Diese Feder 8 wird nun vom freien Ende eines Verbindungsstabes 5 aus so weit in denselben eingesteckt, bis die Nasen 7 in die Schlitze 6 einrasten. Dadurch ist die Lage der Feder 8 im Verbindungsstab 5 gesichert. Wird nun das Ende eines Verbindungsstabes 5 in die zylindrische Öffnung 2 des scheibenartigen Knotenstückes 1 eingesteckt, bewirken die Einsteckschrägen 3, daß die Schenkel 10 der Feder 8 gegeneinander bewegt werden und zwar soweit, daß sie nicht mehr über die Mantelflächen des Verbindungsstabes 5 herausragen. Die Einsteckschrägen 3 geben dabei die Lage vor, in der die Verbindungsstäbe 5 eingesteckt werden, damit die Nasen 7 der Feder 8 sofort die richtige Lage zu den Hinterschneidungen 4 einnehmen. Sobald der Verbindungsstab 5 seine Endlage in der zylindrischen Öffnung 2 des Knotenstückes 1 erreicht hat, federn die Schenkel 10 der Feder 8 wieder nach außen und die Nase 7 rasten in die Hinterschneidungen 4 ein. Damit ist die Lage eines Verbindungsstabes 5 in der zylindrischen Öffnung des Knotenstückes 1 gesichert (Fig. 3).

Im dargestellten Ausführungsbeispiel weist das Knotenstück 1 acht zylindrische Öffnungen 2 auf, die gleichmäßig verteilt über den Umfang des Knotenstückes 1 angeordnet sind. Auch andere Winkellagen der zylindrischen Öffnungen 2 sind möglich. Die Figur 1 der Zeichnung läßt ferner erkennen, daß in jede zylindrische Öffnung 2 ein nur angedeuteter Verbindungsstab 5 eingesteckt ist. In der Figur 1 der Zeichnung sind jedoch die Nasen 7 der Federn 8 in den als Queröffnungen ausgebildeten Hinterschneidungen 4 nicht dargestellt.

Mit dem scheibenartigen Knotenstück 1 gemäß der Figur 1 kann jedoch normalerweise kein räumliches Stabfachwerk gebildet werden. Um dies dennoch zu erreichen, besitzt das Knotenstück 1 zunächst eine Bohrung 11, die mit einer hinterschnittenen, umlaufenden Nut 12 mit Abstand von jeder Seitenfläche versehen ist. In diese Nut 12 führen zwei sich gegenüberliegende Ausnehmnungen 13, die um einen Winkel von etwa 22,5° gegenüber den benachbarten möglichen Anschlußstellen von zwei Verbindungsstäben 5 versetzt sind. In der Figur 2 der Zeichnung ist nun ein Kreuzknotenstück 14 gezeigt, welches einen, dem Knotenstück 1 angepaßten, segmentartigen Querschnitt besitzt. Dieses Kreuzknotenstück 14 besitzt im dargestellten Ausführungsbeispiel drei zylindrische Öffnungen 2, in die jeweils ein nur angedeuteter Verbindungsstab 5 eingesetzt ist. An der Grundfläche dieses Kreuzknotenstückes 14 befindet sich ein bajonettartiger Vorsprung 15, der über die Ausnehmungen 13 in die Öffnung 11 einsteckbar ist, wobei dann nach einer Drehung des Kreuzknotenstückes 14 Vorsprünge 16 in die Nut 12 bewegt werden und das Kreuzknotenstück 14 am Knotenstück 1 sichert. Das Kreuzknotenstück 14 kann nun - ausgenommen die Einsteckstellung - eine weitgehend beliebige Winkellage zum Knotenstück 1 einnehmen, so daß auch mit einem scheibenartigen Knotenstück 1 die Ausbildung räumlicher Stabfachwerke möglich ist. Bedarfsweise können an beiden Seitenflächen des Knotenstückes 1 derartige Kreuzknotenstücke 14 angeschlossen werden. Beispielsweise kann in die Grundfläche des Kreuzknotenstückes 14 eine federbelastete Kugel eingesetzt werden, die in die nach außen offene Hinterschneidung 4 des Knotenstückes 1 einrastet. Damit ist eine besonders gute Sicherung der Winkellage des Kreuzknotenstükkes 14 zum Knotenstück 1 möglich. Bedarfsweise kann das Kreuzknotenstück 14 auch einen elastischen Vorsprung besitzen, der in eine Hinterschneidung 4 einrastet.

Im dargestellten Ausführungsbeispiel ist in jeder Seitenfläche des Knotenstückes 1 eine scheibenförmige Vertiefung 17 mit einem schräg verlaufenden Rand 18 vorgesehen. An der Grundfläche des Kreuzknotenstückes 14 befindet sich nun ein entsprechender Vorsprung 19, der über die Schräge 18 sicher in der Vertiefung 17 drehbar geführt ist.

In Abänderung des erläuterten Ausführungsbeispieles können die Einsteckschrägen 3 auch umlaufend ausgebildet sein. Die Verbindungsstäbe 5 können dann zwar in einer beliebigen Drehlage in die Öffnung 2 eingesteckt werden. Es ist dann allerdings noch eine Drehung der Verbindungsstäbe 5 erforderlich, damit deren federnde Nasen 7 in die Hinterschneidung 4 einrasten. Die Feder 8 kann auch ohne die Windungen 9 ausgebildet sein.

## Patentansprüche

1. Stabfachwerk zur Aufnahme von Paneelen oder dgl., bestehend aus mehreren Verbindungsstäben und Knotenstücken, wobei die Verbindungsstäbe mit ihren Enden in zylindrische Öffnungen von den Knotenstücken führend einsteckbar und anschließbar sind,
**dadurch gekennzeichnet,**
**daß** jeder Verbindungsstab (5) mit geringem Abstand von seinen freien Enden jeweils zwei sich gegenüberliegende, radiale Schlitze (6) mit aus denselben federnd herausragenden Nasen (7) einer eingesetzten Feder (8) besitzt und daß jede Öffnung (2) des Knotenstückes (1) für jede Nase (7) der Sperrfeder (8) eine dieselbe, in den Schlitz (6) zurückdrückende Einsteckschräge (3) sowie eine sich daran anschließende Hinterschneidung (4) zur Aufnahme der aus dem Verbindungsstab (5) herausragenden Nase (7) aufweist.

2. Stabfachwerk nach Anspruch 1,
**dadurch gekennzeichnet,**
**daß** die Hinterschneidungen (4) als Nut oder Queröffnung ausgebildet sind.

3. Stabfachwerk nach Anspruch 1 oder 2,
**dadurch gekennzeichnet,**
**daß** die Knotenstücke (1) als Scheibe ausgebildet sind und zumindest an einer Seite derselben ein scheibenartiges Kreuzknotenstück (14) mit mindestens einer einen Verbindungsstab (5) aufnehmenden Öffnung (2) steckbar angeschlossen ist.

4. Stabfachwerk nach Anspruch 3,
**dadurch gekennzeichnet,**
**daß** das Kreuzknotenstück (14) drehbar am Knotenstück (1) gehalten ist.

5. Stabfachwerk nach Anspruch 3 oder 4,
**dadurch gekennzeichnet,**
**daß** das Kreuzknotenstück (14) bajonettverschlußartig am Knotenstück (1) gesichert ist.

6. Stabfachwerk nach Anspruch 3 oder 4,
**dadurch gekennzeichnet,**
**daß** das Kreuzknotenstück (14) mit dem Knotenstück (1) verschraubt ist.

7. Stabfachwerk nach mindestens einem der Ansprüche 3 bis 5,
**dadurch gekennzeichnet,**
**daß** die Knotenstücke (1) an ihren Seitenflächen eine kreisförmige Führungsfläche (18) für ein Kreuzknotenstück (14) besitzen.

## Claims

1. Rod framework for holding panels or the like, comprising a plurality of connecting rods and junction pieces, it being possible for the connecting rods to be plugged with their ends leading into cylindrical openings in the junction pieces and connected, **characterized in that** each connecting rod (5) in each case has, at a short distance from its free end, two mutually opposite, radial slots (6) with lugs (7) projecting out of the latter in a sprung manner and belonging to an inserted spring (8), and **in that** each opening (2) in the junction piece (1) has, for each lug (7) of the locking spring (8), an insertion bevel (3) which forces the latter back into the slot (6), as well as an adjacent undercut (4) to accommodate the lug (7) projecting out of the connecting rod (5).

2. Rod framework according to Claim 1, **characterized in that** the undercuts (4) are formed as a groove or transverse opening.

3. Rod framework according to Claim 1 or 2, **characterized in that** the junction pieces (1) are formed as a disc and, at least on one side of the same, a disc-like cross junction piece (14) having at least one opening (2) that accommodates a connecting rod (5) is connected in plug-in fashion.

4. Rod framework according to Claim 3, **characterized in that** the cross junction piece (14) is held on the junction piece (1) such that it can rotate.

5. Rod framework according to Claim 3 or 4, **characterized in that** the cross junction piece (14) is secured to the junction piece (1) in the manner of a bayonet catch.

6. Rod framework according to Claim 3 or 4, **characterized in that** the cross junction piece (14) is screwed to the junction piece (1).

7. Rod framework according to at least one of Claims 3 to 5, **characterized in that** the junction pieces (1) have on their side faces a circular guide face (18) for a cross junction piece (14).

## Revendications

1. Treillis pour supporter des panneaux ou similaires, se composant de plusieurs barres de liaison et de pièces de noeuds, les barres de liaison pouvant être enfoncées et pouvant être raccordées par guidage avec leurs extrémités dans des ouvertures cylindriques des pièces de noeuds,
**caractérisé en ce que** chaque barre de liaison (5) possède, à faible distance de son extrémité libre, à chaque fois deux fentes radiales (6) opposées avec des nez (7) dépassant élastiquement hors de celles-ci, d'un ressort inséré (8), et **en ce que** chaque ouverture (2) de la pièce de noeud (1) présente, pour chaque nez (7) du ressort de blocage (8), un biseau d'enfichage (3) pressant celui-ci dans la fente (6) ainsi qu'une contre-dépouille (4) s'y raccordant pour recevoir le nez (7) dépassant hors de la barre de liaison (5).

2. Treillis selon la revendication 1,
**caractérisé en ce que** les contre-dépouilles (4) sont réalisées sous forme de rainure ou d'ouverture transversale.

3. Treillis selon la revendication 1 ou 2,
**caractérisé en ce que** les pièces de noeuds (1) sont réalisées sous forme de disques et au moins sur un de leur côté est raccordée de manière enfichable une pièce de noeud en croix (14) en forme de disque, avec au moins une ouverture (2) recevant une barre de liaison (2).

4. Treillis selon la revendication 3,
**caractérisé en ce que** la pièce de noeud en croix (14) est maintenue de manière rotative sur la pièce de noeud (1).

5. Treillis selon la revendication 3 ou 4,
**caractérisé en ce que** la pièce de noeud en croix (14) est fixée par emboîtement à baïonnette sur la pièce de noeud (1).

6. Treillis selon la revendication 3 ou 4,
**caractérisé en ce que** la pièce de noeud en croix (14) est vissée à la pièce de noeud (1).

7. Treillis selon au moins l'une quelconque des revendications 3 à 5,
**caractérisé en ce que** les pièces de noeuds (1) possèdent, sur leurs faces latérales, une surface de guidage (18) de forme circulaire pour une pièce de noeud en croix (14).
